# EUROPEAN PATENT APPLICATION

(11) **EP 1 460 551 A1**
(43) Date of publication of application: **22.09.2004**
(21) Application number: 02788764.5
(22) Date of filing: 10.12.2002
(51) Int. Cl.: G06F 13/00, G06F 12/00

(54) **CONTENT SERVER, CONTENT DATA DELIVERING METHOD, PROGRAM AND RECORDING MEDIUM**

(30) Priority: 28.12.2001 JP 2001398905
(71) Applicant: NTT DoCoMo, Inc., Tokyo 100-6150 (JP)
(72) Inventor: HIRAMATSU, Yoshiaki, IP Dept. NTT DoCoMo, Inc., Chiyoda-ku, Tokyo 100-6150 (JP); WAKABAYASHI, Tatsuaki, IP Dept. NTT DoCoMo, Inc., Chiyoda-ku, Tokyo 100-6150 (JP); NAGAI, Riko, IP Dept. NTT DoCoMo, Inc., Chiyoda-ku, Tokyo 100-6150 (JP)
(74) Representative: Stein-Dräger, Christiane
(86) International application number: PCT/JP2002/012911
(87) International publication number: WO 2003/058458

(57) **Abstract**

Mobile communication terminal 1, when requesting a download service of motion picture data, transmits model data showing its modes to contents server 5.

Contents server 5 provides the download service in accordance with the capability of each mobile communication terminal by determining functions such as data reception capability (the maximum volume of motion picture data which can be received all at once) of mobile communication terminal 1 on the basis of contents of model data transmitted along with the request for a download service.

## Description

### Technical Field

The present invention relates to a contents server for transmitting contents such as motion picture data to a mobile communication terminal (for instance, a cellular telephone), and a transmission method for contents data.

### Background Art

In recent years, some services for transmitting contents such as motion picture data to mobile communication terminals such as cellular telephones are being provided. These services enable a user to download any desired motion picture data from, for instance, a contents server on the Internet by operating a mobile communication terminal.

Increasingly, various improvements in the functions of recent mobile communication terminals are taking place. However, these improvements are not uniformly applied to all mobile communication terminals, and several significant gaps exist in the functions that each mobile communication terminal is able to perform.

For instance, with regard to functions of mobile communication terminals, and as far as the maximum volume of motion picture data that can be downloaded all at once (hereinafter, referred to as reception capability) is concerned, some mobile communication terminals have the reception capability of only 100 kbytes, whereas other mobile communication terminals may have the reception capability of 1 Mbyte.

In a situation such as this, when motion picture data of above 100 kbytes is transmitted to a mobile communication terminal with a low reception capability, a malfunction in reception occurs, as the mobile communication terminal is not able to receive in totality the transmitted motion picture data. Although, if on the other hand, the only object of a mobile communication terminal is to download motion picture data below 100 kbytes, a terminal with a low reception capability is sufficient, however, if this is the case, a mobile communication terminal with a high reception capability, despite its superior functions becomes redundant as it cannot take advantage of its high reception capability.

### Disclosure of Invention

The present invention is developed to overcome the stated problems of the conventional art. The object of the present invention is to provide, a contents server which is capable of providing a download service for contents such as motion picture data in accordance with the function of each mobile communication terminal when differences in the reception capability of mobile communication terminals exist; a contents data transmission method; a program and a recording medium.

To solve the above-mentioned problems, the present invention provides a contents server comprising: a transmission unit; a reception unit; and a control unit for receiving from the reception unit identification information on a mobile communication terminal requesting contents, determining on the basis of identification information the allowable volume of data the mobile communication terminal can download all at once, producing an information list on a contents data which can be provided by a single downloading process on the basis of the allowable volume of data, and transmitting to the mobile communication terminal the information list from the transmission unit.

By this configuration, the contents server, by determining, on the basis of identification information on the mobile communication terminal requesting contents, the allowable volume of data which the mobile communication terminal is capable of downloading all at once, and on the basis of the allowable volume of data, produces an information list on contents which can be provided by a single downloading process, and transmits the information list to the mobile communication terminal.

In one preferred embodiment, the contents server comprises: a plurality of memory units whose memory volume is equivalent to or smaller than the minimum allowable data volume which can be downloaded all at once, wherein a contents data to be transmitted to the mobile communication terminal whose data volume is equivalent to or smaller than the memory volume is stored in one of a plurality of memory units, and a contents data with greater data quantity than memory volume of each memory unit is divided into segments which can be independently used, and is stored in two or more of a plurality of memory units, and wherein the control unit, when an information list corresponding to a contents data which is divided into a plurality of segments is produced for a mobile communication terminal whose allowable volume of data is equivalent to or smaller than the memory volume, produces an information list consisting only items showing each segment as a result of dividing the contents data; and when an information list showing a contents data divided into a plurality of segments is produced for a mobile communication terminal whose allowable volume of data is greater than the memory volume, produces an information list consisting both items showing each segment as a result of dividing the contents, and items showing the contents data.

Also, in another preferred embodiment, the allowable volume of data is any one of a value depending on the volume of data, which can be received during a certain time period, a value depending on the data processing capability of the mobile communication terminal, or a value depending on memory volume of the mobile communication terminal.

Also, the present invention provides a contents data transmission method comprising: a process for receiving identification information on a mobile communication terminal requesting contents; a process for determining on the basis of the identification information the allowable data volume for the mobile communication terminal to download all at once; a process for producing, on the basis of determined allowable volume of data, an information list on a contents data which can be provided by a single downloading process; and a process for transmitting to the mobile communication terminal the produced information list.

According to this transmission method, by receiving identification information on the mobile communication terminal which requests contents, and by determining on the basis of the identification information the allowable volume of data which the mobile communication terminal is capable of downloading all at once, an information list on a contents data is produced on the basis of the determined allowable volume of data, and is transmitted to the mobile communication terminal.

In another preferred embodiment, a contents data transmission method further comprises: a process for storing a contents data to be transmitted in any one of a plurality of memory units each of which has a smaller memory volume than a minimum value of allowable volume of data which can be downloaded all at once, and storing a contents data with greater data volume than memory volume of each memory unit by dividing into a plurality of segments each of which can be independently used; wherein the process for producing an information list, when the information list corresponding to a contents data which is divided into a plurality of segments is produced, in accordance with allowable volume of data of a mobile communication terminal requesting contents data, chooses an information list consisting an item showing a plurality of segment information, or an information list consisting both an item showing a plurality of segment information and a sum of a plurality of segment information.

The present invention provides a program which causes a computer to execute: a step for receiving identification information on a mobile communication terminal which requests contents; a step for determining on the basis of the identification information the allowable volume of data which the mobile communication terminal can download all at once; a step for producing, on the basis of determined allowable volume of data, an information list on a contents data which can be provided by a single downloading process; and a step for transmitting to the mobile communication terminal the produced information list.

Also, the present invention provides a computer-readable recording medium, wherein a program is recorded for causing a computer to execute: a step for receiving identification information on a mobile communication terminal which requests contents; a step for determining on the basis of the identification information the allowable volume of data which the mobile communication terminal can download all at once; a step for producing, on the basis of the determined allowable volume of data, an information list on a contents data which can be provided by a single downloading process; and a step for transmitting to the mobile communication terminal the produced information list.

### Brief Description of Drawings

Fig.1 is a configuration diagram showing communication system 100 of one embodiment of the present invention.
Fig.2 is a configuration diagram of contents server 5 of communication system 100.
Fig.3 is a pattern diagram showing contents of memory 55 of contents server 5 of communication system 100.
Fig.4 is a pattern diagram showing contents of memory 55 of contents server 5 of communication system 100.
Fig.5 is a flowchart showing the control of control unit 53 of contents server 5 of communication system 100.
Fig.6 is a sequence chart showing the operation of communication system 100.
Fig.7 is a flowchart showing the control of control unit 53 of contents server 5 of communication system 100.
Fig.8 is a diagram exemplifying the image displayed on the displaying unit of mobile communication terminal 1A of communication system 100.
Fig.9 is a diagram, exemplifying the image displayed on the displaying unit of mobile communication terminal 1B of communication system 100.
Fig.10 is a flowchart showing the control of control unit 53 of contents server 5 of communication system 100.
Fig.11 is a diagram exemplifying the image displayed on the displaying unit of mobile communication terminal 1A and 1B of communication system 100.
Fig.12 is a diagram exemplifying the image displayed on the displaying unit of mobile communication terminal 1A and 1B of communication system 100.

### Best Mode of Carrying out the Invention

Hereinafter, the preferred embodiment of the present invention will be explained by referring to figures.

### [1] Embodiments of the Invention

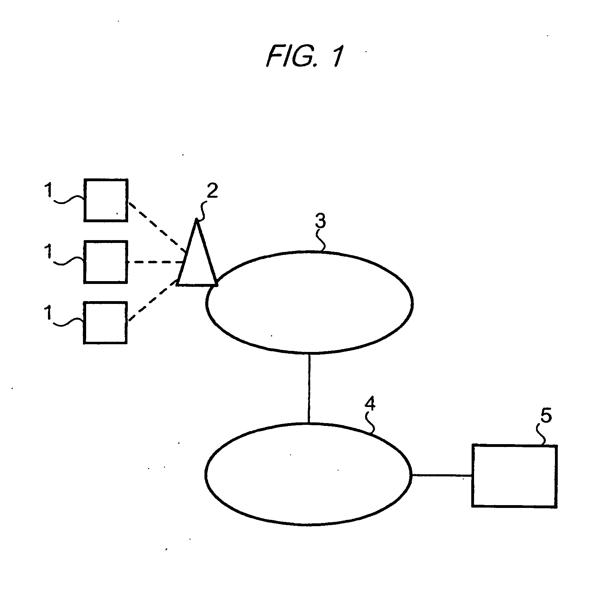

Fig.1 is a diagram showing the configuration of communication system 100 of the present embodiment. As shown in Fig.1, communication system 100 consists of mobile communication terminal 1A and 1B, base station 2, mobile packet communication network 3, Internet 4, and contents server 5. Communication system 100 could be equipped with more mobile communication terminals or base stations than those shown in Fig.1.

In communication system 100, two models, namely mobile communication terminal 1A and mobile communication terminal 1B, exist.

The reception capability of mobile communication terminal 1A is low, and has the function of downloading motion picture data up to 100 kbytes all at once. Also, the reception capability of mobile communication terminal 1B is high, and has the function of downloading motion picture data up to 1 Mbyte.

The volume of motion picture data which can be downloaded all at once is determined by each element such as the data processing capability of CPU (Central Processing Unit) installed in each mobile communication terminal, the memory volume for storing received data; and the reproduction processing capability of the received data.

In the explanation below, when the mobile communication terminal shown is described merely as mobile communication terminal 1, it refers to either mobile communication terminal 1A or mobile communication terminal 1B.

As shown in Fig.1, each mobile communication terminal 1 is connected to Internet 4 via base station 2 and mobile packet communication network 3, and carries out transmission and reception of data with contents server 5, which is also connected to Internet 4.

Mobile communication terminal 1 is equipped with a memory which consists of ROM (Read Only Memory), RAM (Random Access Memory); and in ROM, is pre-installed a specific program for carrying out transmission and reception of data with contents server 5. In RAM, are stored image data downloaded from contents server 5 and so forth.

Also, mobile communication terminal 1 is equipped with a displaying unit comprising LCD and so forth, and the inputting unit comprising the operation button and so forth.

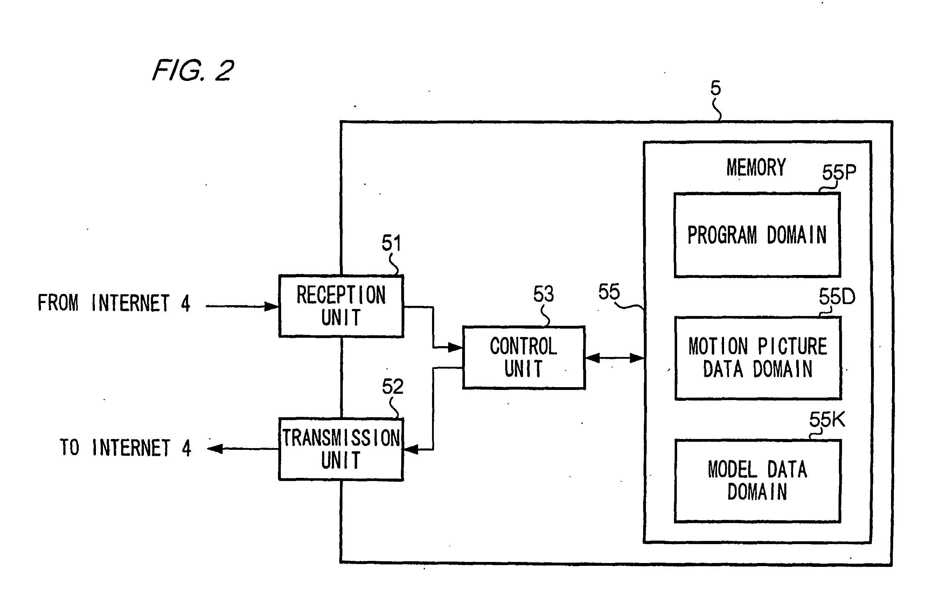

Next, the configuration of contents server 5 is explained by referring to Fig.2.

As shown in Fig.2, contents server 5 is equipped with reception unit 51, transmission unit 52, control unit 53, and memory 55.

Control unit 53 is comprised of CPU and so forth, and controls each unit of contents server 5.

Memory 55, as shown in Fig.2, is equipped with program domain 55P, motion picture data domain 55D, and model data domain 55K. Each of these domains is comprised of ROM unit and RAM unit, respectively.

In program domain 55P, are pre-stored several kinds of programs pertaining to communication system 100. Control unit 53 of contents server 5 activates programs in program domain 55P, and transmits, for instance, motion picture data to mobile communication terminal 1.

In motion picture data domain 55D, is stored motion picture data to be provided to each mobile communication terminal 1.

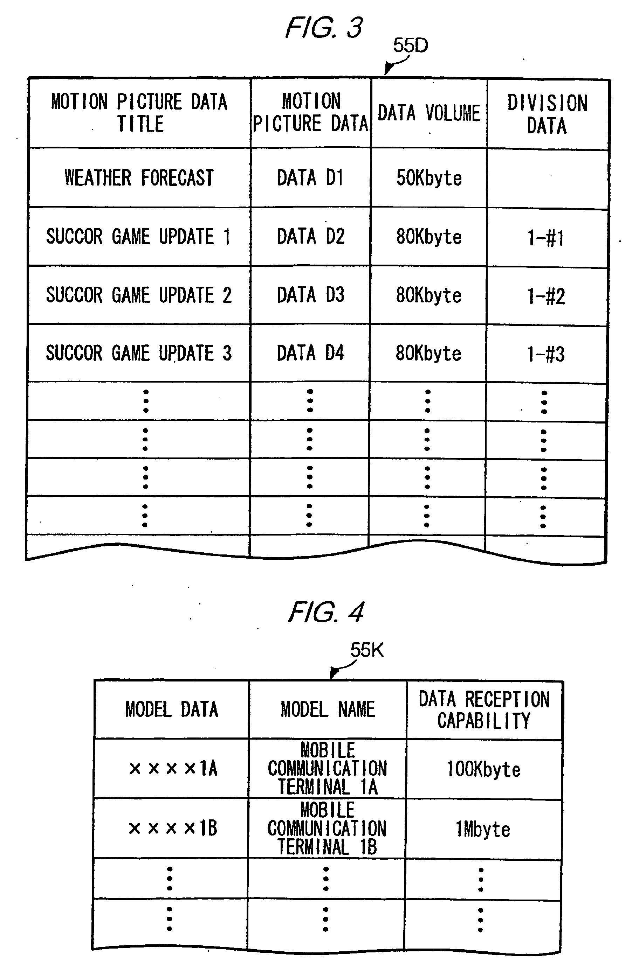

Fig.3 shows a pattern diagram of data contents in motion picture data domain 55D. As shown in Fig.3, in motion picture data domain 55D, are stored motion picture data (data D1 to D4), information on the volume of motion picture data, the title of motion picture data, as well as the order of data division if data is divided in correspondence with each other.

Motion picture data (data D1 to D4) is coded by specific coding algorithm such as MPEG (Motion Picture Experts Group), and is divided so as to be data of 100 kbytes or below when needed.

Each motion picture data (data D1 to D4) is independent. Each data can be downloaded, and can be reproduced, independently.

In model data domain 55K, as shown in Fig.4, are stored a table with information on model data, model names of mobile communication terminals, and data reception capability in correspondence with each other.

### B: Operation of Embodiment

Next, the operation of the present embodiment is explained by referring to figures.

### B1: Motion Picture Data Storage Process

In communication system 100, motion picture data is provided to contents server 5 accordingly by the motion picture data provider's terminal (not shown) via Internet 4.

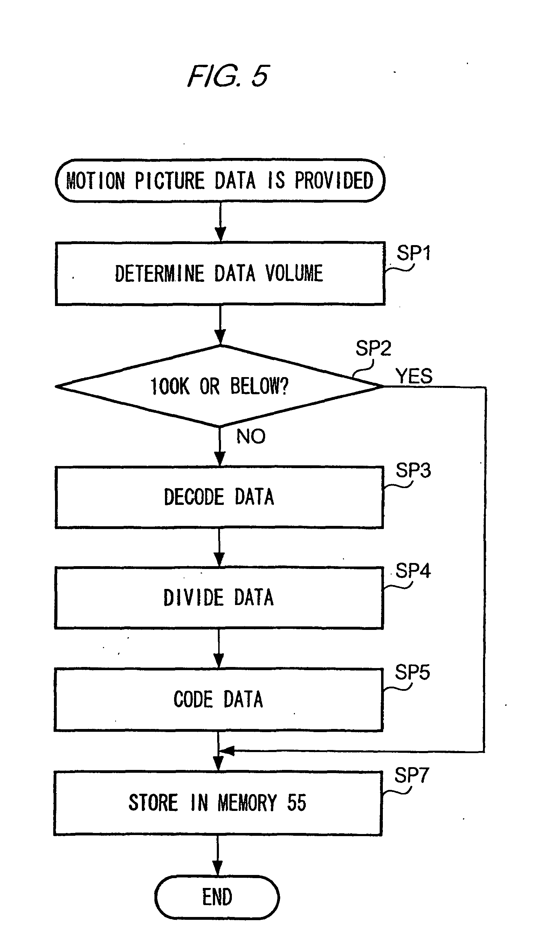

Fig.5 is a flowchart showing the control of control unit 53 when new motion picture data is provided to contents server 5.

Firstly, control unit 53 determines the data volume on the basis of record information in the header of the provided motion picture data (Step Sp 1).

When the volume of motion picture data is 100 kbytes or below (Step Sp 2: YES), control unit 53 stores the motion picture data in motion picture data domain 55D of memory 55. At the same time, the volume of the motion picture data, and the title of the motion picture data are stored in correspondence with the motion picture data (Step Sp7). The title of the motion picture data is pre-stored in the header of the motion picture data.

On the other hand, when motion picture data is above 100 kbytes (Step Sp2: NO), control unit 53 divides motion picture data into data of 100 kbytes or below (Step Sp 3 to 5). Then, control unit 53 stores the divided data in motion picture data domain 55D of memory 55. Then, control unit 53 stores in memory 55 the data volume of divided motion picture data, the title, and information showing the order of division in correspondence with the motion picture data (Step Sp 7).

Hereinafter, one example of the process for dividing motion picture data is explained.

As one example, motion picture data, which is coded by MPEG 2 is used. Coded data by MPEG 2 consists of a plurality of unit pictures equivalent to one image, which gathers toward the time axis. However, in some pictures, coding is carried out on the basis of prediction by using the data difference value between the pictures and other pictures whose time locations differ; therefore, data cannot be divided while data is still coded.

By taking the above-mentioned fact into account, control unit 53 first decodes data of image data that is above 100 kbytes (Step Sp 3). Then, the decoded data is divided into segments (Step Sp 4), and each unit of the data is coded (Step Sp 5).

Then, new title information containing the order of division is stored in the header of each divided data. For instance, when motion picture data of "Soccer Game Update" is divided into three segments, title information such as "Soccer Game Update #1", "Soccer Game Update #2", and "Soccer Game Update #3" is recorded in the header of each divided data.

By carrying out the division process in this manner, each motion picture data becomes independent data, and can be individually downloaded and reproduced.

Also, in the header of each divided data, title information showing the order of division is recorded; therefore, in accordance with the order of division, data can become a single stream data again. Then, the stream data could be downloaded and reproduced all at once.

### B2: Downloading Process of Motion Picture Data

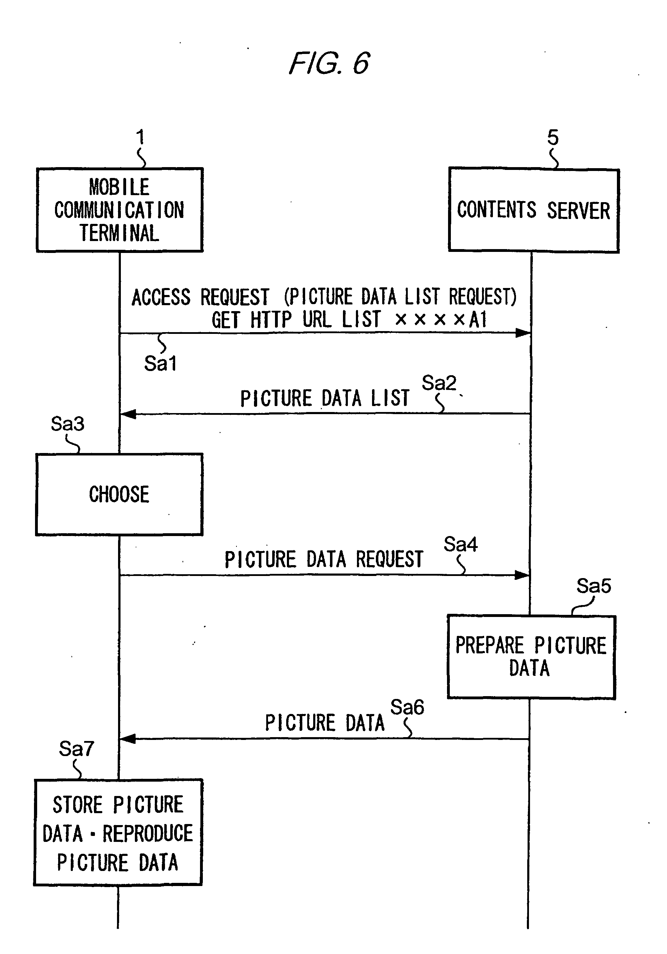

Fig. 6 is a sequence diagram showing the operation for mobile communication terminal 1 to download picture data from contents server 5.

As shown in Fig.6, mobile communication terminal 1 first requests contents server 5 for access, and establishes data communication path with contents server 5. At this stage, mobile communication terminal 1 outputs model data showing data reception capability of the terminal (Step Sa 1).

After receiving the access request, contents server 5 determines the reception capability of mobile communication terminal 1 from a model data. Then, in accordance with the reception capability of mobile communication terminal 1, contents server 5 transmits a data list of motion picture data which can be provided to mobile communication terminal 1 (Step Sa 2).

The user of mobile communication terminal 1 chooses motion picture data, which he/she wishes to download from the list (Step Sa 4). Then, the user requests contents server 5 to provide motion picture data (Step Sa 5).

Contents server 5 transmits the requested motion picture data to mobile communication terminal 1 (Step Sa 6).

Mobile communication terminal 1 stores the received motion picture data in the memory. Hereinafter, when the user carries out a specific operation, mobile communication terminal 1 reproduces the motion picture data (Step Sa 7).

Each of the above-mentioned operation is explained in detail below.

### 1) Access Request (Fig.6: Step Sa1)

Mobile communication terminal 1, after being connected to Internet 4, transmits an access request to contents server 5, which is also connected to Internet 4, after the user carries out a specific operation.

After the access request is approved, and the communication path between mobile communication terminal 1 and contents server 5 is established, mobile communication terminal 1 requests contents server 5 for data of the list image of motion picture data, which can be downloaded. At this stage, mobile communication terminal 1 transmits model data recorded in the memory of the terminal to contents server 5.

In Fig.6, the portion "GET HTTP URL LIST" is equivalent to a request command to receive a list image of motion picture data, which can be downloaded.

Also, in Fig.6, the portion "xxxx 1A" is equivalent to model data of mobile communication terminal 1. In this case, an example of one data of mode of mobile communication terminal 1A is shown.

### 2) Transmission of List Image Data of Motion Picture Data (Fig. 6: Step Sa 2)

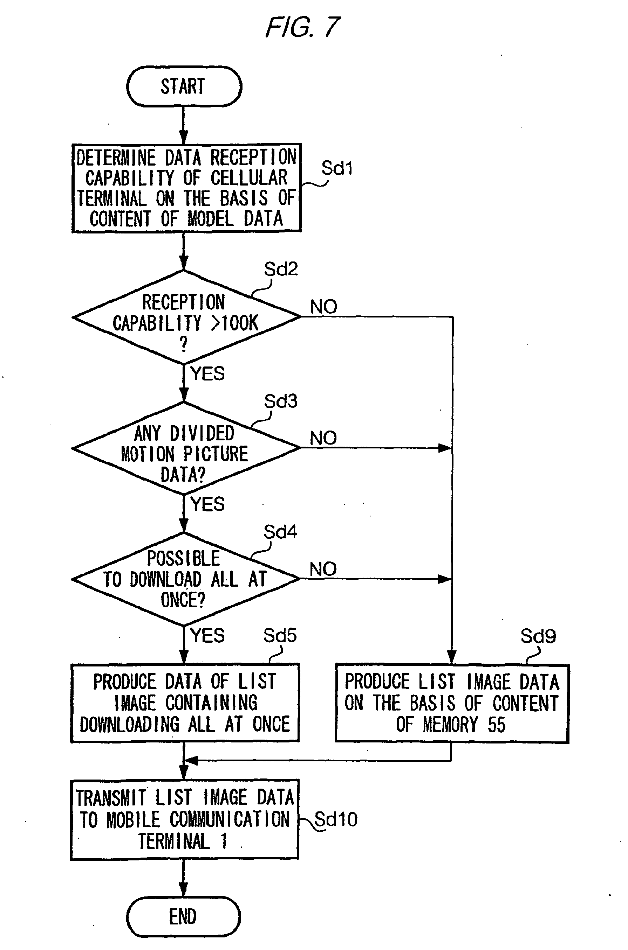

Fig.7 is a flowchart showing the operation by control unit 53 of contents server 5 in Step Sa2 in Fig.6 when data of the list image is produced.

For instance, when mobile communication terminal 1 requests for data of the list image, control unit 53 determines that mobile communication terminal 1A is capable of receiving data of 100 kbye only on the basis of the received model data and the table of memory 55 (model data domain 55K) (Step Sd1, Step Sd 2: NO).

Then, control unit 53 produces data of the list image of each motion picture data, which is recorded in memory 55 (motion picture data domain 55D) (Step Sd 9). Specifically, list image data pertaining to four motion picture data segments of "Weather Forecast", "Soccer Game Update #1", "Soccer Game Update #2", and "Soccer Game Update #3" is produced.

Hereinafter, control unit 53 transmits the produced data of the list image to mobile communication terminal 1A (Step Sd 10).

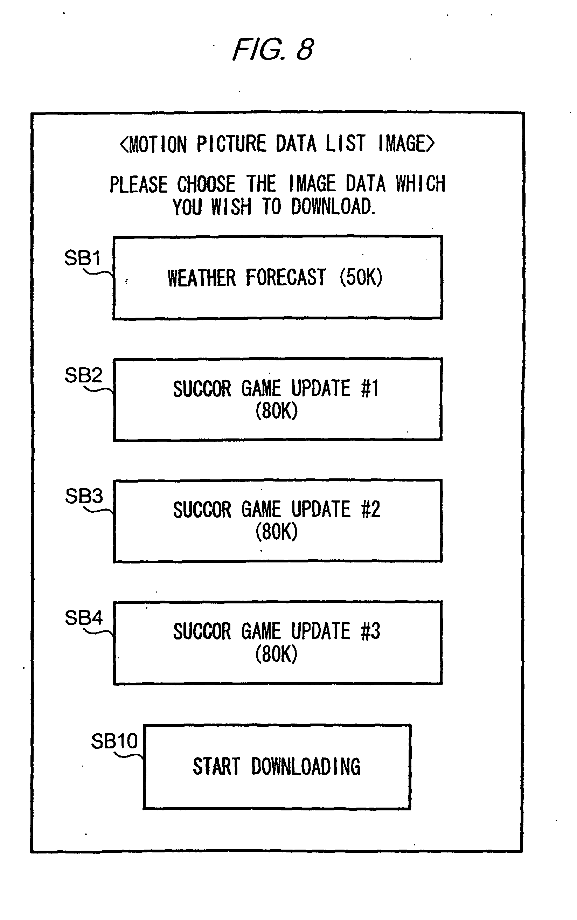

Fig. 8 is a diagram exemplifying contents displayed on the displaying unit of mobile communication terminal 1A after receiving the produced data of the list image.

Fig. 8 is an example in which titles pertaining to four motion picture data segments of "Weather Forecast", "Soccer Game Update #1", "Soccer Game Update #2", and "Soccer Game Update #3" corresponding to soft buttons SB1 to SB4 respectively are displayed. The user chooses one motion picture data he/she wishes to download in the picture exemplified in Fig. 8 by operating mobile communication terminal 1A. Then, the user requests contents server 5 to download the data.

At this stage, each motion picture data shown in Fig.8 is data of 100 kbytes or below. Therefore, when mobile communication terminal 1A requests the downloading of any motion picture data, contents server 5 can accept the request.

At this stage, in Fig.8, the list image data is exemplified not only by titles of motion picture data, but also with contents of data volume, and the convenience is provided to the user of mobile communication terminal 1A in this manner.

Next, by returning to Fig.7, a case in which a list image of motion picture data is requested by mobile communication terminal 1B will be explained through a specific example.

Firstly, control unit 53 determines that mobile communication terminal 1B is capable of receiving data up to 1 Mbyte from contents of received model data and contents of memory 55 (model data domain 55K) (Fig.7: Step Sd 1).

Then, control unit 53 produces data of the list image. In this case, mobile communication terminal 1B is capable of receiving data of above 100 kbytes (Step Sd 2: YES); therefore, control unit 53 determines whether all the divided data segments can be downloaded at one time.

In the present example, three divided data segments of "Soccer Game Update #1", "Soccer Game Update #2", and "Soccer Game Update #3" exist in memory 55 (picture data domain 55D) (Step Sd 3 : YES).

Control unit 53 compares the total of data volume of these three divided data (240 kbyte) segments to data reception capability of mobile communication terminal 1B, and determines if the data can be downloaded all at once (Step Sd 4). At this sage, the total data volume of the divided data is less than the data reception capability of mobile communication terminal 1B (1 Mbyte); therefore, control unit 53 determines that the whole data can be downloaded all at once (Step Sd 4: YES).

In this case, control unit 53 produces a list image data containing an item for downloading the whole of data segment "Soccer Game Update" in addition to "Weather Forecast", "Soccer Game Update #1", "Soccer Game Update #2", and "Soccer Game Update #3" (Step Sd 5).

Hereinafter, control unit 53 transmits the produced data of the list image to mobile communication terminal 1B (Step Sd 10).

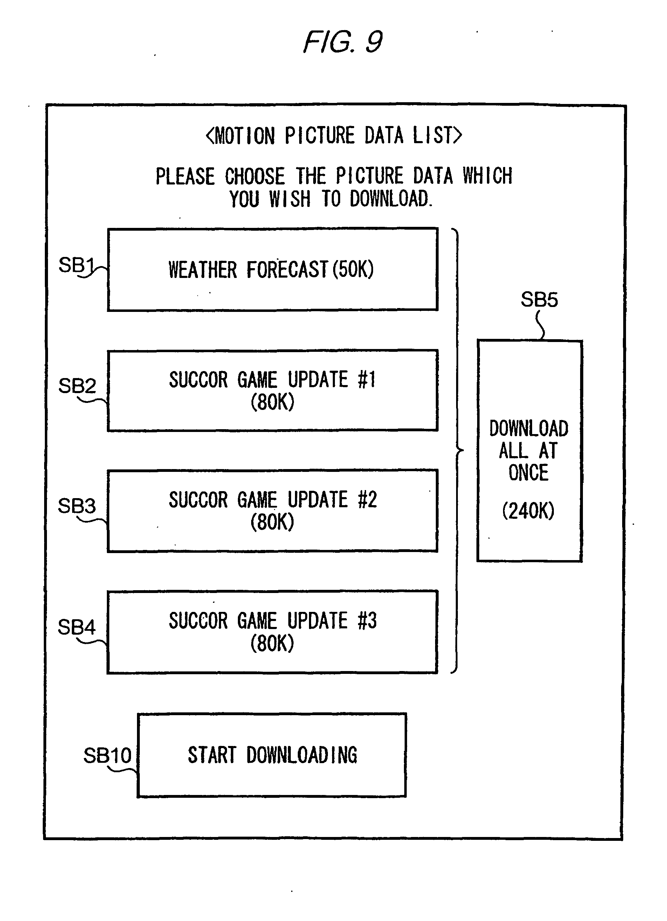

Fig.9 exemplifies contents displayed on the displaying unit of mobile communication terminal 1B after receiving the produced data of the list image. The difference between the above-mentioned Fig.8 and Fig.9 is that, with regard to motion picture data pertaining to "Soccer Game Update", soft button SB5 showing "Download All At Once" is displayed. The user of mobile communication terminal 1B, after seeing the picture shown in Fig.9, chooses one motion picture data he/she wishes to download, and transmits a downloading request to contents server 5.

At this stage, each motion picture data shown in Fig.9 is data, which is not above the data reception capability of mobile communication terminal 1B (1 Mbyte). Hence, when mobile communication terminal 1B requests the downloading of any picture data, contents server 5 can accept the request.

### 3) Download Request (Fig.6: Step Sa 3, Step Sa 4)

The user of mobile communication terminal 1, after seeing the picture exemplified in Fig.8 or Fig.9, chooses the motion picture data to be downloaded. The selection of motion picture data to be downloaded is carried out by the user performing a specific operation on mobile communication terminal 1, clicking any one of soft buttons (SB 1 to 4) exemplified in the picture of Fig.8 or Fig.9.

Hereinafter, as the user clicks soft button SB 10 showing "Download Begins", information on motion picture data the user wishes to download is transmitted to contents server 5 as a download request.

### 4) Download of Motion Picture Data (Fig.6: Step Sa 5, Step Sa 6)

After mobile communication terminal 1 requests contents server 5 for downloading, control unit 53 reads out the requested motion picture data from memory 55 (motion picture data domain 55D), and transmits to mobile communication terminal 1.

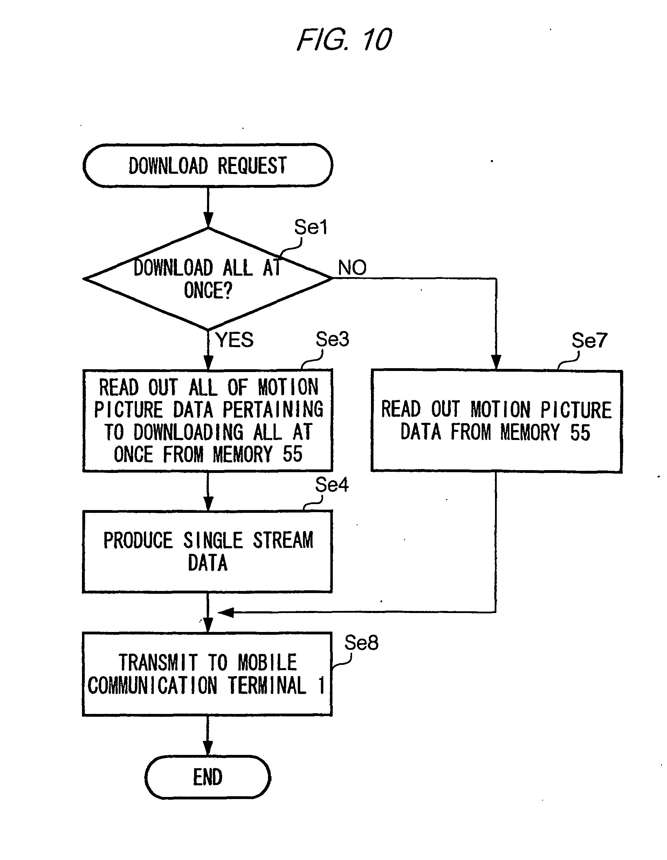

Fig.10 is a flowchart showing contents of the control program of control unit 53 when download is requested.

Control unit 53, when the object of downloading is not data to be downloaded all at once (Step Se 1: NO), reads out the motion picture data from memory 55 (motion picture data domain 55D) (Step Se 7), and transmits to mobile communication terminal 1 (Step Se 8). At this stage, control unit 53 divides motion picture data into packets. Then, control unit 53 attaches to each packet the IP address, which has been allocated to mobile communication terminal 1 beforehand, and transmits the packets in sequence to mobile communication terminal 1.

Next, a case in which the object of downloading is data to be downloaded all at once (Step Se 1: YES) will be explained. In the present example, mobile communication terminal 1B requests the downloading of "Soccer Game Update" all at once.

And control unit 53 reads out all of the motion picture data segments "Soccer Game Update #1", "Soccer Game Update #2", and "Soccer Game Update #3" to be downloaded all at once from memory 55 (motion picture data domain 55D) (Step Se 3). Then, in accordance with information showing on the order of division of data recorded in the header of each motion picture data, control unit 53 produces a single stream data (Step Se 4), and transmits to mobile communication terminal 1 (Step Se 8).

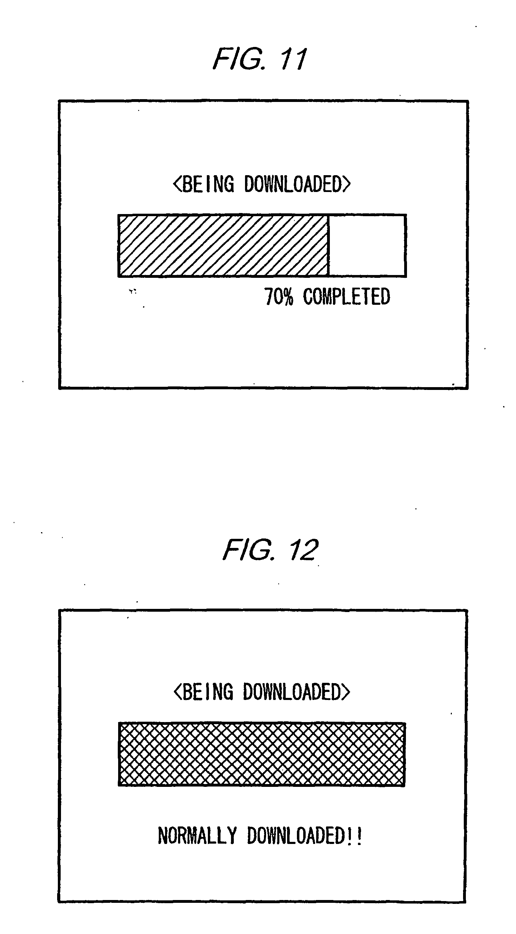

Fig. 11 is a diagram exemplifying the picture displayed on mobile communication terminal 1 during the downloading of data, and Fig. 12 is a diagram of the picture displayed on mobile communication terminal after the download has been completed. The convenience is enhanced for the user by showing that the process of downloading is normally carried out and completed on the displaying unit of mobile communication terminal 1.

### 5) Display of Motion Picture Data after Downloading (Fig.6: Step Sa 5)

Mobile communication terminal 1 stores received data in the memory in sequence. Then, after downloading, mobile communication terminal 1 carries out the process for reproducing the received motion picture data after the user performs a specific operation.

On the other hand, control unit 53 of contents server 5, after completing the downloading process of the requested motion picture data, prepares to accept requests for the system utilization and so forth from other mobile communication terminals 1.

Contents server 5 relating to communication system 100 is able to provide the download service in accordance with the reception capability of each mobile communication terminal 1 in this manner.

Contents server 5, to mobile communication terminal 1A with a reception capability only up to 100 kbytes, does not show data, which is above 100 kbytes as a list item of downloadable motion picture data. Hence, no download request for motion picture data, which is above 100 kbytes should be transmitted from mobile communication terminal 1A; therefore, a normal download service can always be provided to mobile communication terminal 1A.

Also, contents server 5, to mobile communication terminal 1B with reception capability of 1 Mbyte, shows data up to 1 Mbyte as a list item of downloadable motion picture data. Hence, a downloading service taking advantage of reception capability up to 1 Mbyte can be provided to mobile communication terminal 1B.

A download service in accordance with the reception capability of each of mobile communication terminals 1A and 1B respectively can be provided in this manner.

### C: Modification

The above explanation is one example of the embodiment of the present invention. Further modification is possible within the scope of the present invention. For instance, some examples of modifications are possible as follows.

### <Modification 1>

In the above-mentioned embodiment, only two types of mobile communication terminals, in other words, mobile communication terminal 1A with reception capability of 100 kbytes or below, and mobile communication terminal 1B with reception capability of above 100 kbytes, are explained, but these are just a few examples, and other types can also be used.

Also, a plurality of mobile communication terminals with reception capabilities of three kinds or more could exist in the system. Even in this case, when a mobile communication terminal, prior to requesting a download service, transmits to contents server 5 model data showing the model of itself (a function such as reception capability), contents server 5, by carrying out the process identical to the above-mentioned embodiment, can obtain the same effect.

### <Modification 2>

In the above-mentioned embodiment, model data of mobile communication terminal 1 is transmitted to contents server 5, but data directly showing reception capability can also be transmitted.

For instance, mobile communication terminal 1A with reception capability of 100 kbytes or below, by installing an internal memory, can be equipped with reception capability of 1Mbyte. In this case, by transmitting data directly showing reception capability, mobile communication terminal 1A with reception capability of 1 Mbyte is able to receive the download service equivalent to mobile communication terminal 1B.

### <Modification 3>

In the above-mentioned embodiment, on the basis of mobile communication terminal 1A, which has the lowest reception capability, the downloadable motion picture data is divided so as to be data of 100 kbyte or below, and is stored in memory 55. However, instead of this method, data equivalent to the greatest common factor of the reception capability of each mobile communication terminal 1 can be the basis.

For instance, if mobile communication terminals 1 with reception capabilities of 100 kbytes, 150 kbytes, and 300 kbytes exist, on the basis of 50 kbytes which is the greatest common factor of these values, motion picture data is appropriately divided so as to be 100 kbytes or below, and is stored in memory 55. By carrying out the operation in this manner, a download service in accordance with the reception capability of each mobile communication terminal 1 can be provided.

### <Modification 4>

In memory 55 of contents server 5, motion picture data (contents) can be the only data to be stored. In this case, a system server to control entire communication system 100 can be provided separately on Internet 4, which can carry out the control function executed by control unit 53 of the above-mentioned embodiment.

### <Modification 5>

Also, any recording medium, for instance, a semi-conductor memory, CD-ROM (Compact Disc-Read Only Memory), an optical disc such as CD-R (Compact Disc-Recordable), MO (Magneto Optic), a magnetic optical disc such as MD (Mini Disc), a floppy disc, or a magnetic disc such as a hard disc can be used to record the program of the present invention, and the program can be provided for contents server 5 via these recording media.

Also, a program can be provided for contents server 5 by any method, and instead of using the above-mentioned recording media, for instance, the program can be provided by so-called net delivery by which the program is provided for memory 55 of contents server 5 via a network such as the Internet from the server with a program of the present invention stored (not shown) on Internet 4.

### <Modification 6>

In the above-mentioned embodiment, contents server 5 is directly connected to Internet 4. Contents server 5 can be connected to mobile packet communication network 3 via, for instance, the exclusive line instead. Also, contents server 5 can be installed in mobile packet communication network 3.

### <Modification 7>

The above-mentioned embodiment is explained by using the example of mobile communication terminal 1 with the packet communication function. However, application of the present invention is possible as far as data communication can be carried out via mobile packet communication network 3, and for instance, a PHS (Personal Handyphone System: trademark) terminal, PDA (Personal Digital Assistant), a mobile computer and so forth can be used.

Also, mobile communication terminal I can be in any mode; hence, mobile communication terminal 1 can be a card type or a type, which can be worn on a wrist or on the back. Furthermore, mobile communication terminal 1 can be a necklace type or a pendant type unit.

### <Modification 8>

Also, the present invention can be applied to a communication system, which does not involve a mobile communication network such as mobile packet communication network 3. In this case, a communication system can be of a circuit switching style. Also, a personal computer, PDA and so forth can of course be used instead of mobile communication terminal 1. Furthermore, Internet 4 can be intranet or LAN (Local Area Network).

## Claims

1. A contents server comprising:
a transmission unit;
a reception unit; and
a control unit for receiving from said reception unit identification information on a mobile communication terminal requesting contents, determining on the basis of said identification information allowable volume of data said mobile communication terminal can download all at once, producing an information list on contents data which can be provided by a single downloading process on the basis of said allowable volume of data, and transmitting to said mobile communication terminal an information list by said transmission unit.

2. A contents server according to Claim 1 further comprising:
a plurality of memory units whose memory volume is equivalent to or smaller than minimum allowable data volume which can be downloaded all at once,
wherein contents data to be transmitted to said mobile communication terminal whose data volume is equivalent to or smaller than said memory volume are stored in one of said plurality of memory units, and contents data with a greater data quantity than memory volume of each memory unit is divided into segments which can be independently used, and is stored in two or more of said plurality of memory units, and
wherein said control unit, when an information list corresponding to a contents data which is divided into a plurality of segments is produced for a mobile communication terminal whose allowable volume of data is equivalent to or smaller than said memory volume, produces an information list consisting only items showing each segment as a result of dividing said contents data; and when an information list showing contents data divided into a plurality of segments is produced for a mobile communication terminal whose allowable volume of data is greater than said memory volume, produces an information list consisting both items showing each segment as a result of dividing said contents, and items showing said contents data.

3. A contents server according to Claim 1,
wherein said allowable volume of data is a value depending on volume of data which can be received within a certain time period.

4. A contents server according to Claim 1,
wherein said allowable volume of data is a value depending on data processing capacity of said mobile communication terminal.

5. A contents server according to Claim 1,
wherein said allowable volume of data is a value depending on memory volume of said mobile communication terminal.

6. A contents data transmission method comprising:
a process for receiving identification information on a mobile communication terminal requesting contents;
a process for determining on the basis of said identification information allowable data volume for said mobile communication terminal to download all at once;
a process for producing, on the basis of determined allowable volume of data, an information list on contents data which can be provided by a single downloading process; and
a process for transmitting to said mobile communication terminal the produced information list.

7. A contents data transmission method according to Claim 6, further comprising:
a process for storing contents data to be transmitted in any one of a plurality of memory units each of which has a smaller memory volume than a minimum value of allowable volume of data which can be downloaded all at once, and storing contents data with a greater data volume than memory volume of each memory unit by dividing into a plurality of segments each of which can be independently used;
wherein said process for producing an information list, when an information list corresponding to contents data which is divided into a plurality of segments is produced, in accordance with allowable volume of data of a mobile communication terminal requesting contents data, chooses an information list consisting an item showing a plurality of segment information, or an information list consisting both an item showing a plurality of segment information and a sum of a plurality of segment information.

8. A program for causing a computer to execute:
a step for receiving identification information on a mobile communication terminal which requests contents;
a step for determining on the basis of said identification information allowable volume of data which said mobile communication terminal can download all at once;
a step for producing, on the basis of determined allowable volume of data, an information list on contents data which can be provided by a single downloading process; and
a step for transmitting to said mobile communication terminal the produced information list.

9. A program according to Claim 8 for causing a computer to further execute:
a step for storing contents data to be transmitted in any one of a plurality of memory units each of which has a smaller memory volume than the minimum value of allowable volume of data which can be downloaded all at once, and storing contents data with a greater data volume than the memory volume of each memory unit into a plurality of memory units by dividing into a plurality of segments each of which can be independently used;
wherein said step for producing an information list, when the information list corresponding to contents data which is divided into a plurality of segments is produced in accordance with allowable volume of data of a mobile communication terminal requesting contents data, chooses an information list consisting only items showing a plurality of segment information, or an information list consisting both items showing a plurality of segment information and items showing contents data of a sum of a plurality of segment information.

10. A computer-readable recording medium,
wherein a program for causing a computer to execute:
a step for receiving identification information on a mobile communication terminal which requests contents;
a step for determining on the basis of said identification information allowable volume of data which said mobile communication terminal can download all at once;
a step for producing, on the basis of determined allowable volume of data, an information list on contents data which can be provided by a single downloading process; and
a step for transmitting to said mobile communication terminal the produced information list,
is recorded.

11. A recording medium according to Claim 10,
wherein a program for causing a computer to further execute:
a step for storing contents data to be transmitted in any one of a plurality of memory units each of which has smaller memory volume than minimum value of allowable volume of data which can be downloaded all at once, and storing contents data with greater data volume than memory volume of each memory unit into a plurality of memory units by dividing into a plurality of segments each of which can be independently used;
wherein said step for producing an information list, when an information list corresponding to contents data which is divided into a plurality of segments is produced, in accordance with allowable volume of data of a mobile communication terminal requesting contents data, chooses an information list consisting only items showing a plurality of segment information, or an information list consisting both items showing a plurality of segment information and items showing contents data of a sum of a plurality of segment information,
is recorded.
